# EUROPÄISCHE PATENTANMELDUNG

(11) **EP 4 787 349 A1**
(43) Veröffentlichungstag der Anmeldung: **05.08.2026**
(21) Anmeldenummer: 25223006.5
(22) Anmeldetag: 12.12.2025
(51) Int. Cl.: G08B 17/12

(54) **SYSTEM UND VERFAHREN ZUR ERKENNUNG EINER BRANDGEFAHR ODER EINES SICH ENTWICKELNDEN BRANDES EINES HAUSHALTSKÜCHENGERÄTES**

(30) Priorität: 22.01.2025 BE 202500007
(71) Anmelder: Miele & Cie. KG, 33332 Gütersloh (DE)
(72) Erfinder: Köpp, Lukas, 33378 Rheda-Wiedenbrück (DE); Carsten, Daniel, 33615 Bielefeld (DE); Frese, Maksim, 33102 Paderborn (DE)

(57) **Zusammenfassung**

Die Erfindung betrifft ein System (100) zur Erkennung einer Brandgefahr oder eines sich entwickelnden Brandes eines Haushaltsküchengerätes (102), das System (100) aufweisend, das Haushaltsküchengerät (102), mindestens einen Sensor (104) zum Erfassen von Sensordaten zu dem Haushaltsküchengerät (102) und/oder einer Geräteumgebung (106), und mindestens eine Recheneinrichtung (108), auf der ein maschinelles Lernmodell (110) ausführbar ist, und die dazu ausgebildet ist, die bereitgestellten Sensordaten durch das maschinelle Lernmodell (110), das dazu trainiert ist, mindestens einen Hinweis auf die Brandgefahr oder den sich entwickelnden Brand in den Sensordaten zu erkennen, zu verarbeiten, und auf Basis des mindestens einen Hinweises auf die Brandgefahr oder den sich entwickelnden Brand mindestens eine Aktion (112) zumindest zur Verringerung der Brandgefahr oder des sich entwickelnden Brandes des Haushaltsküchengerätes (102) zu erzeugen. Ferner betrifft die Erfindung ein Verfahren zur Erkennung einer Brandgefahr oder eines sich entwickelnden Brandes eines Haushaltsküchengerätes 102.

## Beschreibung

Die Erfindung betrifft ein System und ein Verfahren zur Erkennung einer Brandgefahr oder eines sich entwickelnden Brandes eines Haushaltsküchengerätes.

Im Haushalt, insbesondere in der Küche, treten regelmäßig Unfälle auf, die teilweise gravierende Folgen haben. Eine der häufigsten Ursachen für Feuerwehreinsätze in Privathaushalten ist das sogenannte "Essen auf Herd". Diese Einsätze konzentrieren sich oft auf die üblichen Essenszeiten, da es während des Kochens durch Ablenkung, Unaufmerksamkeit oder Alltagsherausforderungen - insbesondere bei älteren Menschen - zu (Entstehungs-)Bränden kommt. Häufige Gründe sind unbeaufsichtigtes Kochen, falsch abgelegte Küchenutensilien und/oder zu lange Garzeiten. Selbst kleinere Brandereignisse führen häufig zu großen Schäden, da Brandrauch offene Bereiche einer Wohnung oder eines Hauses durchdringt und Löschwasser bzw. Löschmittel zusätzlichen Schaden anrichten kann. Der damit verbundene Aufwand für Renovierungen sowie die emotionalen Belastungen der Betroffenen sind erheblich.

Der Stand der Technik zeigt, dass in industriellen Küchen bereits Systeme zur Branddetektion und Reaktion existieren. Diese umfassen Feuermelder, die auf Rauch und/oder Wärme reagieren, sowie automatische Maßnahmen wie Alarmierungen, Abschaltungen oder Löschsysteme. In Haushaltsküchen sind solche Technologien bisher nicht umfassend bekannt. Lediglich haushaltsübliche Rauchmelder melden beispielsweise ein Brandereignis. Eine Abschaltung eines betreffenden Küchengerätes, das zu dem Brand führt, oder gar automatische Löschmaßnahmen werden im Haushalt bislang nicht durchgeführt. Einige Haushaltsküchengeräte bieten jedoch Funktionen, die spezifische Gefahren minimieren, wie beispielsweise Induktionskochfelder, die eine Erhitzung ohne geeignetes Kochgeschirr verhindern, oder Backöfen, die den Garvorgang anhand von Kamerabildern überwachen und stoppen können. Trotz dieser Fortschritte bestehen weiterhin signifikante Lücken, da solche Ansätze nicht die gesamte Bandbreite potenzieller Brandursachen abdecken und insbesondere in Haushaltsküchen keine umfassenden Brandvermeidungs- und Reaktionssysteme verfügbar sind.

Vor diesem Hintergrund ist es eine Aufgabe der Erfindung, ein, insbesondere brandschutztechnisch, verbessertes System und/oder Verfahren zur Erkennung einer Brandgefahr oder eines sich entwickelnden Brandes eines Haushaltsküchengerätes anzugeben.

Erfindungsgemäß wird die Aufgabe durch ein System mit den Merkmalen des Patentanspruchs 1 gelöst. Ferner wird dieses Problem durch ein Verfahren mit den Merkmalen des Patentanspruchs 15 gelöst. Vorteilhafte Ausgestaltungen und Weiterbildungen der Erfindung ergeben sich aus den nachfolgenden abhängigen Ansprüchen.

Vorliegend wird ein System zur Erkennung einer Brandgefahr oder eines sich entwickelnden Brandes eines Haushaltsküchengerätes beansprucht. Das System umfasst das Haushaltsküchengerät, mindestens einen Sensor zum Erfassen von Sensordaten zu dem Haushaltsküchengerät und/oder einer Geräteumgebung, und mindestens eine Recheneinrichtung, auf der ein maschinelles Lernmodell ausführbar ist, und die dazu ausgebildet ist, die bereitgestellten Sensordaten durch das maschinelle Lernmodell, das dazu trainiert ist, mindestens einen Hinweis auf die Brandgefahr oder den sich entwickelnden Brand in den Sensordaten zu erkennen, zu verarbeiten, und auf Basis des mindestens einen Hinweises auf die Brandgefahr oder den sich entwickelnden Brand mindestens eine Aktion zumindest zur Verringerung der Brandgefahr oder des sich entwickelnden Brandes des Haushaltsküchengerätes zu erzeugen.

Vorliegend wird ferner ein Verfahren zur Erkennung einer Brandgefahr oder eines sich entwickelnden Brandes eines Haushaltsküchengerätes beansprucht. Das Verfahren umfassend die Schritte: Erfassen von Sensordaten zu dem Haushaltsküchengerät und/oder einer Geräteumgebung durch mindestens einen Sensor; Verarbeiten der bereitgestellten Sensordaten durch mindestens ein maschinelles Lernmodell, das dazu trainiert ist, mindestens einen Hinweis auf die Brandgefahr oder den sich entwickelnden Brand in den Sensordaten zu erkennen; und wenn der mindestens eine Hinweis auf die Brandgefahr oder den sich entwickelnden Brand in den Sensordaten durch das maschinelle Lernmodell erkannt wird, Erzeugen mindestens einer Aktion zumindest zur Verringerung der Brandgefahr oder des sich entwickelnden Brandes des Haushaltsküchengerätes.

Das Erfassen von Sensordaten bezeichnet vorzugsweise den Vorgang, bei dem Informationen wie Temperatur, Rauchentwicklung, Luftqualität oder andere relevante physikalische Parameter durch entsprechende Sensoren gesammelt und digitalisiert werden, um sie für die weitere Verarbeitung verfügbar zu machen. Auch kann das Erfassen von Sensordaten ein Erfassen von Bild- und/oder Videodaten aus verschiedenen Datenformaten umfassen. Auch kann das Erfassen von Sensordaten ein Erfassen von Bewegungsinformationen eines Nutzers aufweisen.

Ein maschinelles Lernmodell ist vorzugsweise ein datengetriebenes System, das durch Training auf großen Datensätzen Muster erkennen und Vorhersagen treffen kann, insbesondere im Kontext der Analyse von Sensordaten zur Identifikation potenzieller Brandgefahren.

Ein Hinweis auf die Brandgefahr oder den sich entwickelnden Brand ist vorzugsweise eine automatisch generierte Warnung, die durch die Analyse der Sensordaten erkannt wird und den Nutzer über potenzielle oder tatsächliche Gefahren informiert. Eine Aktion zumindest zur Verringerung der Brandgefahr oder des sich entwickelnden Brandes des Gerätes umfasst vorzugsweise Maßnahmen wie das automatische Abschalten des Haushaltsküchengeräts, das Aktivieren eines Alarms und/oder das Einleiten von Löschmechanismen, um die Gefahr zu minimieren.

Durch den Einsatz des mindestens einen maschinellen Lernmodells bzw. durch die damit einhergehende Überwachung eines Bedien- und/oder Betriebsprozesses des mindestens einen Haushaltsküchengerätes mittels künstlicher Intelligenz (Kl) werden Schadensereignisse, wie ein Brand und ggf. auch bereits ein Verbrennen oder Übergaren von Nahrungsmitteln frühzeitig erkannt, was die allgemeine Sicherheit im Haushalt erhöht. Möglich wird dies insbesondere durch die Nutzung der bereits in dem Haushaltsküchengerät umfassten Sensorik, beispielsweise Sensorik zur Temperaturmessung, Sensorik zur Erfassung von Kamerabildern und/oder zur Erfassung von Infrarotbildern. Diese Nutzung kann auch um für den Haushalt angepasste Sensorik aus Industriebereichen (Wärmebild, Rauchdetektion, etc.) ergänzt werden. Ggf. kann auch eine Sensorik aus Drittgeräten, wie Mikrofone, Kameras und/oder Präsenzmelder in intelligenten Lautsprechern und/oder intelligenten Bildschirmen und/oder in intelligenten tragbaren Geräten, wie Uhren, zur Analyse durch das maschinelle Lernmodell genutzt werden. Auch kann das maschinelle Lernmodell ein Wissen über spezifische und/oder allgemeine Bedienprozesse des Haushaltsküchengerätes, beispielsweise über einen Kochprozess, bei der Analyse miteinbeziehen.

Durch das vorliegende Verfahren und System wird die Sicherheit im Haushalt erhöht, und insbesondere eine Brandgefahr verringert. Ferner erhalten Nutzer, die aus verschiedenen Gründen regelmäßig oder zeitweise abgelenkt werden oder eine allgemein niedrige Aufmerksamkeitsspanne besitzen, wie dies beispielsweise bei Eltern in Familien mit Kindern, oder auch bei älteren Menschen der Fall sein kann, durch die Erfindung einen Sicherheitsmehrwert. Ferner können durch die Erfindung ggf. zusätzliche Einsparungen bei Hausrats- und/oder Gebäudeversicherung erzielt werden, da ein häufiger Grund für Brände im privaten Umfeld durch die vorliegende Erfindung stark eingeschränkt wird.

Das maschinelle Lernmodell wird vorzugsweise trainiert, eine Brandgefahr auf Basis von Sensordaten zu erkennen, indem das maschinelle Lernmodell mit umfassenden und vielfältigen Datensätzen trainiert wird, die typische Muster und Merkmale von Brandgefahren abbilden. Die Trainingsdaten umfassen vorzugsweise Sensordaten aus realen oder simulierten Szenarien, wie Temperaturverläufe, Rauchentwicklungen, Kohlenstoffdioxid-Konzentrationen, Luftfeuchtigkeit oder andere physikalische Parameter. Zusätzlich können auch Daten aus Kameras oder Mikrofonen einbezogen werden, wie visuelle Anzeichen von Flammen oder auditiv wahrnehmbare Geräusche eines sich entwickelnden Brandes. Diese Daten werden vorzugsweise in Klassen kategorisiert, beispielsweise "normale Betriebszustände", "potenzielle Brandgefahr" und "sich entwickelnder Brand", um dem Modell beizubringen, zwischen diesen Zuständen zu unterscheiden.

Das maschinelle Lernmodell kann je nach Art der Sensordaten unterschiedlich aufgebaut sein. Bei numerischen Daten, wie sie von Temperatursensoren oder Gassensoren geliefert werden, eignen sich neuronale Netze, insbesondere Recurrent Neural Networks (RNNs) oder Long Short-Term Memory (LSTM)-Netzwerke, da diese zeitlichen Abhängigkeiten in den Daten analysieren können. Für visuelle Daten, wie sie von Kameras aufgenommen werden, kommen häufig Convolutional Neural Networks (CNNs) zum Einsatz, die speziell für die Verarbeitung von Bilddaten geeignet sind. Bei auditiven Daten können Modelle auf Basis von Spectral Analysis kombiniert mit CNNs oder Transformer-Modellen genutzt werden, um relevante akustische Muster zu identifizieren.

Für multimodale Daten, bei denen Informationen aus verschiedenen Sensortypen gleichzeitig ausgewertet werden, kommen vorzugsweise multimodale Modelle zum Einsatz. Diese Modelle integrieren vorzugsweise Daten aus verschiedenen Quellen, wie numerischen, visuellen und auditiven Informationen, um ein umfassenderes Verständnis der Situation zu ermöglichen. Transformer-basierte Architekturen, wie BERT oder GPT-ähnliche Modelle, können vorzugsweise angepasst werden, um Eingaben aus unterschiedlichen Modalitäten zu verarbeiten und/oder ihre Wechselwirkungen zu analysieren. Durch diese Kombination wird die Erkennungsgenauigkeit erhöht, da die Stärken der verschiedenen Datenquellen genutzt und Unsicherheiten in einzelnen Kanälen ausgeglichen werden können.

Das Training erfolgt vorzugsweise iterativ, indem das Modell auf Trainingsdatensätzen mit bekannten Ergebnissen trainiert und anhand von Testdatensätzen validiert wird. Dabei werden vorzugsweise Algorithmen wie Backpropagation und Optimierungsmethoden verwendet, um die Modellparameter zu verfeinern. Zur Vermeidung von Überanpassungen können vorzugsweise Techniken wie Datenaugmentation, Dropout oder Cross-Validation eingesetzt werden.

In einem weiteren Aspekt wird vorgeschlagen, dass das maschinelle Lernmodell dazu trainiert ist, unter Verwendung eines vorbestimmten Grenzkriteriums den mindestens einen Hinweis auf die Brandgefahr oder den sich entwickelnden Brand in den Sensordaten zu erkennen.

"Unter Verwendung eines vorbestimmten Grenzkriteriums, den mindestens einen Hinweis auf die Brandgefahr oder den sich entwickelnden Brand in den Sensordaten zu erkennen" bezeichnet vorzugsweise, dass der Hinweis auf eine erkannte Brandgefahr nur dann ausgegeben wird, wenn ein oder mehrere gemessene Werte von Sensoren - wie beispielsweise Temperatur, Rauchdichte oder Kohlenstoffdioxid-Konzentration - ein zuvor festgelegtes Schwellen- oder Grenzkriterium überschreiten oder bestimmte kombinierte Bedingungen erfüllen. Dieses Grenzkriterium dient als Entscheidungsgrundlage, um sicherzustellen, dass der Hinweis nur bei tatsächlich relevanten Gefahren ausgelöst wird, wodurch Fehlalarme minimiert und die Relevanz der Warnung erhöht wird. Das maschinelle Lernmodell ist also trainiert, sicherheitsrelevante Abweichungen vom normalen Kochprozess bzw. Fehlverhalten des Nutzers zu erkennen. Die **KI** kann dabei bewusst zurückhaltend sein und erst agieren, wenn ein unmittelbares Risiko, festgelegt durch das Grenzkriterium, eintreten. Dabei soll das maschinelle Lernmodell den Nutzer nicht bevormunden oder ihn mit Hinweisen überschütten.

**In** einem weiteren Aspekt wird vorgeschlagen, dass der mindestens eine Sensor einen optischen Sensor, insbesondere eine Kamera, und/oder einen Infrarotsensor und/oder einen Wärmebildsensor und/oder einen Temperatursensor und/oder ein Mikrofon und/oder einen Rauchsensor aufweist.

Das mindestens eine maschinelle Lernmodell erhält vorzugsweise Informationen über einen Koch- bzw. Garprozess aus unterschiedlichen Sensor-Quellen, die von Aufbau des Haushaltsküchengerätes und/oder der Ausstattung eines Haushalts abhängig sein können. Denkbar ist, dass das maschinelle Lernmodell in einigen Fällen nur auf Sensordaten von Sensoren des zu überwachenden Haushaltsküchengerätes zugreift. Alternativ ist es aber auch denkbar, dass das maschinelle Lernmodell aus multimodalen Sensorquellen des gesamten Haushalts mit Informationen gespeist wird, wobei der Haushalt beispielsweise vollständig von Kameras erfasst werden kann.

**In** einem weiteren Aspekt wird vorgeschlagen, dass die Sensordaten Bilddaten und/oder Videodaten und/oder Infrarot-Bilddaten und/oder Wärmebilddaten und/oder Temperaturdaten und/oder Audiodaten und/oder Rauchentwicklungsdaten aufweisen.

Die Sensordaten können von verschiedenen Sensoren erfasst werden und unterschiedliche physikalische und visuelle Eigenschaften der Umgebung repräsentieren. Diese Sensordaten können Bilddaten umfassen, die durch optische Kameras aufgenommen werden, Videodaten, die zeitlich aufeinanderfolgende Bilder als Bewegungssequenzen darstellen, sowie Infrarot-Bilddaten oder Wärmebilddaten, die Temperaturverteilungen in der Umgebung sichtbar machen. Darüber hinaus können Temperaturdaten direkt von Temperatursensoren geliefert werden, Audiodaten von Mikrofonen, die akustische Signale wie Knacken, Zischen oder Alarme aufnehmen, und Rauchentwicklungsdaten, die von Rauchmeldern gemessen werden und die Konzentration von Rauchpartikeln in der Luft angeben. Die Kombination dieser verschiedenen Datenquellen ermöglicht eine umfassende Analyse potenzieller Brandgefahren.

In einem weiteren Aspekt wird vorgeschlagen, dass das maschinelle Lernmodell ferner dazu ausgebildet ist, den mindestens einen Hinweis in den Sensordaten auch unter Verwendung von Informationen über ein mit dem Haushaltsküchengerät zubereitendes Gargut und/oder unter Verwendung von Informationen über ein Nutzerverhalten eines Nutzers des Haushaltsküchengerätes und/oder unter Verwendung von Informationen über den Nutzer des Haushaltsküchengerätes und/oder unter Verwendung von Informationen über ein Interaktionsverhalten eines Nutzers mit einer, insbesondere mobilen, Geräteapplikation zu erkennen.

Neben den Sensordaten können dem maschinellen Lernmodell auch weitere Informationen über einen aktuellen Kochprozess, beispielsweise in Form eines Rezepts, zur Verfügung gestellt werden. Basierend auf diesen Informationen kann das maschinelle Lernmodell dazu eingerichtet sein, zu erkennen, wenn ein Sicherheitsproblem auftritt bzw. auftreten könnte, was zu einer Brandgefahr führen könnte. Es kann beispielsweise erkannt werden, dass ein Fremdkörper auf einem Kochfeld oder im Bereich eines Kochfeldes platziert wurde, der zu einem Brand führen könnte. Es kann auch eine Abweichung einer vorbestimmten Gardauer einer Zutat festgestellt werden, die zum Verbrennen der Zutat führen könnte. Es kann auch erkannt werden, wenn keine Reaktion eines Nutzers auf ein Ablaufsignal einer Stoppuhr erfolgt. Es kann auch erkannt werden, dass sich kein Nutzer in der Geräteumgebung aufhält, obwohl dies sicherheitstechnisch gefordert wäre. Es können auch steigende Temperaturen in dem Heißgerät oder auf dem Kochfeld erkannt werden, die einen Hinweis auf einen Entstehungsbrand geben können. Es kann auch eine Erkennung von Rauch- und/oder einem Brandereignis durch eine Kamera erfolgen. Ferner kann eine Erkennung von einem Unfall, beispielsweise ein Schneiden mit einem Küchenmesser, und/oder einem ohnmächtig werden der kochenden Person erfolgen. Die Erkennung kann durch tragbare Endgeräte des Nutzers, beispielsweise einer Smartwatch, unterstützt werden. Die von dem tragbaren Endgerät erfassbaren Daten und/oder Signale können vorliegend dem maschinellen Lernmodell vorzugsweise ebenfalls als Eingabedaten zur Verfügung gestellt werden. Dies kann beispielsweise über eine Cloudanbindung erfolgen.

In einem weiteren Aspekt wird vorgeschlagen, dass das vorbestimmte Grenzkriterium unter Verwendung von Informationen über ein mit dem Haushaltsküchengerät zubereitendes Gargut und/oder unter Verwendung mindestens einer der Informationen anpassbar ist.

Wird beispielsweise erkannt, dass ein leicht brennbares Gargut mit dem Haushaltsküchengerät zubereitet werden soll, kann eine Anpassung des Grenzkriteriums erfolgen, um so frühzeitiger als sonst vor einer etwaigen Brandgefahr zu warnen. Im Unterschied dazu kann bei der Zubereitung eines unkritischen Garguts, beispielsweise bei einem Erhitzen von Wasser, ein Anpassen des Grenzkriteriums erfolgen, um so den Nutzer nur in einem wirklich kritischen Fall vor einem sich anbahnenden Brand zu warnen. Auch kann so ein Anpassen der mehrstufigen Warnung des Nutzers, insbesondere individuell, eingestellt bzw. angepasst werden.

In einem weiteren Aspekt wird vorgeschlagen, dass die mindestens eine Recheneinrichtung dazu ausgebildet ist, die mindestens eine Aktion mehrstufig zu erzeugen, um derart in mehreren Stufen die Verringerung der Brandgefahr oder des sich entwickelnden Brandes des Haushaltsküchengerätes zu erwirken.

Die mindestens eine Aktion in mehreren Stufen bezeichnet vorzugsweise eine Abfolge von Maßnahmen, die in abgestuften Schritten ausgeführt werden, um auf eine erkannte Situation, wie eine Brandgefahr, zu reagieren. Die Stufen können dabei beispielsweise von einer anfänglichen Warnung über akustische, visuelle oder haptische Signale bis hin zu aktiven Eingriffen wie der automatischen Abschaltung des Geräts, der Aktivierung einer Löschmitteleinrichtung oder der Benachrichtigung externer Stellen, wie der Feuerwehr, reichen. Die Abfolge erfolgt dabei in Abhängigkeit von der Schwere der Situation oder weiteren erkannten Parametern. Das maschinelle Lernmodell kann in mehreren Stufen Entscheidungen treffen.

In einem weiteren Aspekt wird vorgeschlagen, dass die Recheneinrichtung dazu ausgebildet ist, durch die mindestens eine Aktion ein akustisches und/oder visuelles und/oder haptisches Warnsignal auszugeben, um derart auf die Brandgefahr hinzuweisen.

Eine Aktion, ein akustisches und/oder visuelles und/oder haptisches Warnsignal auszugeben, um derart auf die Brandgefahr hinzuweisen, bezeichnet vorzugsweise eine Maßnahme des Haushaltsküchengerätes, bei der durch das Erzeugen eines hörbaren Tons, eines sichtbaren Signals, wie eines Blinklichts und/oder einer Anzeige, und/oder einer fühlbaren Vibration oder eines ähnlichen haptischen Feedbacks die Aufmerksamkeit des Nutzers auf eine erkannte Brandgefahr gelenkt wird, um rechtzeitig auf die Situation reagieren zu können. Beispielsweise kann zur Information bzw. Alarmierung des mindestens einen Nutzers auch eine Push-Benachrichtigung auf einem Mobiltelefon des Nutzers und/oder in einer gerätespezifischen Mobil-Applikation ausgegeben werden. Auch ist eine Ausgabe eines akustischen Signals über ein (intelligentes) Drittgerät, wie einen intelligenten Lautsprecher und/oder ein tragbares Endgerät und/oder sonstiges möglich.

In einem weiteren Aspekt wird vorgeschlagen, dass die Recheneinrichtung dazu ausgebildet ist, durch die mindestens eine Aktion das Haushaltsküchengerät abzuschalten oder zumindest in einen brandsicheren Betriebsmodus zu versetzen.

Ein brandsicherer Betriebsmodus des Haushaltsküchengerätes bezeichnet vorzugsweise einen Betriebszustand, in dem die Funktionen des Haushaltsküchengerätes so angepasst oder eingeschränkt werden, dass potenzielle Brandgefahren minimiert oder vollständig ausgeschlossen werden. Dies kann durch Maßnahmen wie eine Reduzierung der maximalen Betriebstemperatur, eine automatische Überwachung kritischer Parameter, eine Deaktivierung bestimmter risikobehafteter Funktionen oder eine Begrenzung der Betriebsdauer realisiert werden. In einer weiteren Stufe der mindestens einen Aktion, ist also vorzugsweise eine Abschaltung des betroffenen Haushaltsküchengerätes möglich, um so eine Brandgefahr zu minimieren oder bei einem bereits auftretenden Brand, dessen Ausbreitung durch Abschneiden der Energiezufuhr zu verhindern.

In einem weiteren Aspekt wird vorgeschlagen, dass das System ferner einen Rauchabzug aufweist, und wobei die Recheneinrichtung dazu ausgebildet ist, durch die mindestens eine Aktion den Rauchabzug zu aktivieren.

Insbesondere bei einer (wahrnehmbaren) Rauchentwicklung ist auch das Einschalten des Rauchabzuges oder allgemein einer Abzugshaube möglich, um so eine Ausbreitung des Rauchs auf weitere Bereiche des Haushalts zu vermeiden und eine Gesundheitsgefahr für die Bewohner auszuschließen.

In einem weiteren Aspekt wird vorgeschlagen, dass das System mindestens eine Löschmitteleinrichtung zum Löschen eines Brandes des Küchengerätes aufweist, und wobei die Recheneinrichtung dazu ausgebildet ist, durch die mindestens eine Aktion die Löschmitteleinrichtung zum Löschen des Brandes des Küchengerätes zu aktivieren.

Eine Löschmitteleinrichtung zum Löschen eines Brandes bezeichnet vorzugsweise eine Vorrichtung, die dazu eingerichtet ist, ein geeignetes Löschmittel wie Wasser, Schaum, Pulver, Gas oder andere brandbekämpfende Substanzen freizusetzen, um einen Brand zu bekämpfen oder dessen Ausbreitung zu verhindern. Hierbei sind beispielsweise lebensmittelneutrale Löschmittel wie CO₂ möglich. Auch Stickstoff-basierte Löschmittel sind vorstellbar.

Bevorzugt in einer weiteren Stufe können somit durch die mindestens eine Aktion konkrete Löschmaßnahmen eingeleitet werden, die je nach Haushaltsküchengerät verfügbar sein können. In geschlossenen Heißgeräten, wie Backöfen, kann eine solche Löschmitteleinrichtung besonders bevorzugt eingesetzt werden, um den Sauerstoff aus einem Geräteinneren zu verdrängen. Dabei kann beispielsweise eine CO₂-Kartusche in dem Haushaltsküchengerät umfasst sein, die durch die mindestens eine Aktion ausgelöst wird. Umfasst das mindestens eine Haushaltsküchengerät ein Kochfeld, kann ebenfalls eine Löschmitteleinrichtung, wie eine CO₂-Kartusche, eingesetzt werden, insbesondere, wenn über dem Kochfeld eine Abzugshaube angeordnet ist.

In einem weiteren Aspekt wird vorgeschlagen, dass das System einen Kohlenstoffdioxid-Sensor zum Messen einer Kohlenstoffdioxid-Konzentration in der Geräteumgebung aufweist, wobei die Löschmitteleinrichtung zum Löschen des Brandes des Küchengerätes mittels Kohlenstoffdioxid ausgebildet ist, und wobei die Recheneinrichtung dazu ausgebildet ist, die Löschmitteleinrichtung in Abhängigkeit der gemessenen Kohlenstoffdioxid-Konzentration in der Geräteumgebung zu regulieren, beispielsweise zu deaktivieren.

Ein Kohlenstoffdioxid-Sensor zum Messen einer Kohlenstoffdioxid-Konzentration ist vorzugsweise ein Sensor, der die Menge an Kohlenstoffdioxid in der Umgebungsluft eines Gerätes detektiert und diese als Messwert zur weiteren Verarbeitung bereitstellt.

Die Löschmitteleinrichtung in Abhängigkeit der gemessenen Kohlenstoffdioxid-Konzentration in der Geräteumgebung zu regulieren bedeutet vorzugsweise, dass die Recheneinrichtung so konfiguriert ist, dass sie bei Erreichen eines bestimmten Konzentrationswertes von Kohlenstoffdioxid automatisch abgeschaltet wird, um unerwünschte Effekte wie eine Beeinträchtigung der Umgebung zu verhindern.

Es ist bevorzugt, wenn das Haushaltsküchengerät und/oder eine Geräteumgebung über eine Sensorik verfügen, die eine CO₂-Konzentration überwacht, um so sicherzustellen, dass keine Personen in der Geräteumgebung sind, da die Sauerstoffverdrängung durch CO₂ für den Menschen gefährlich sein kann.

In einem weiteren Aspekt wird vorgeschlagen, dass das Haushaltsküchengerät den mindestens einen Sensor umfasst und/oder wobei der mindestens eine Sensor in der Geräteumgebung, insbesondere in einem intelligenten Lautsprecher und/oder in einem intelligenten Display und/oder in einem sonstigen intelligenten tragbaren Gerät angeordnet ist.

Sowohl das Haushaltsküchengerät als auch eine Umgebung im Haushalt können verschiedene Arten von Sensoren aufweisen, um derart das maschinelle Lernmodell bei der Ermittlung einer Brandgefahr möglichst umfassend zu unterstützen. Im einfachsten Fall kann nur das Haushaltsküchengerät durch mindestens einen Sensor Sensordaten zur Verfügung stellen, durch die auf eine Brandgefahr geschlossen werden kann. In anderen Fällen können auch nur Sensordaten von Sensoren, die in der Geräteumgebung angeordnet sind, dem maschinellen Lernmodell bereitgestellt werden. In weiteren Fällen können Sensoren auch in intelligenten Endgeräten des Nutzers verbaut sein und dem maschinellen Lernmodell zur Auswertung zur Verfügung gestellt werden.

In einem weiteren Aspekt wird vorgeschlagen, dass das Haushaltsküchengerät die Recheneinrichtung aufweist oder wobei die Recheneinrichtung in einer Server- oder Cloudstruktur ausgebildet ist.

Die für die Verarbeitung von Sensordaten und die Erkennung von Brandgefahren benötigte Recheneinheit kann also direkt in dem Haushaltsküchengerät integriert oder von diesem umfasst sein. Dies ermöglicht eine lokale Analyse und Verarbeitung der Daten ohne die Notwendigkeit externer Verbindungen. Alternativ oder ergänzend kann die Recheneinheit dezentral in einer Server- oder Cloudumgebung implementiert werden, wodurch die Daten zur Analyse an eine externe Infrastruktur übertragen werden. Dies bietet den Vorteil größerer Rechenkapazitäten und Skalierbarkeit, unter Voraussetzung einer stabilen Netzwerkverbindung.

Ein Ausführungsbeispiel der Erfindung ist in den Zeichnungen rein schematisch dargestellt und wird nachfolgend näher beschrieben. Es zeigt
- Figur 1: eine beispielhafte Ausführungsform eines vorliegenden Systems; und
- Figur 2: ein schematisches Flussdiagramm einer Ausführungsform des vorliegenden Verfahrens.

Im Folgenden werden, sofern nicht anders angegeben, für gleiche und gleichwirkende Merkmale gleiche Bezugszeichen verwendet.

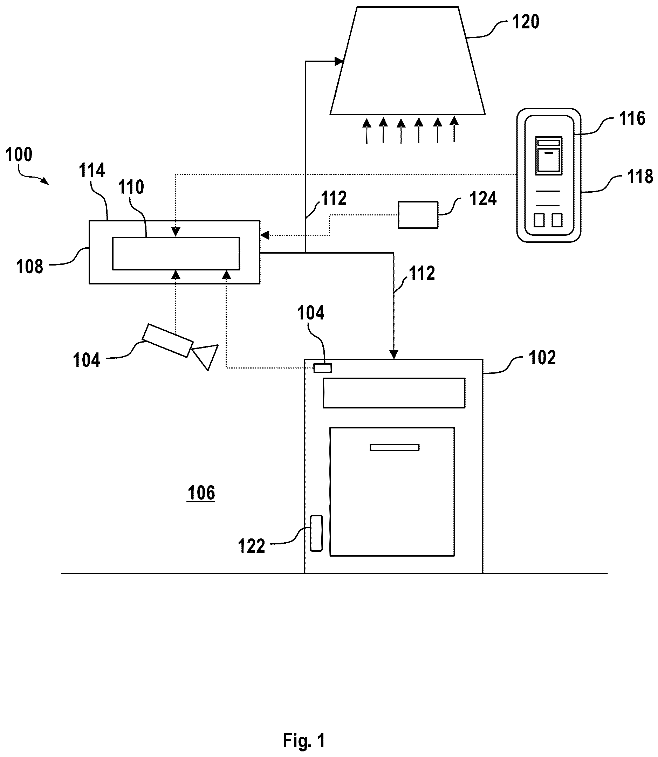

Figur 1 zeigt ein Ausführungsbeispiel eines Systems 100 zur Erkennung einer Brandgefahr oder eines sich entwickelnden Brandes eines Haushaltsküchengerätes 102. Das Haushaltsküchengerät 102 weist beispielhaft einen Backofen oder einen Herd oder ein Kochfeld oder ein Grillfeld oder einen Dampfgarer oder einen Tellerwärmer auf.

Das System 100 weist mindestens einen Sensor 104 zum Erfassen von Sensordaten zu dem Haushaltsküchengerät 102 und/oder einer Geräteumgebung 106 auf. Vorliegend weist das System 100 als den mindestens eine Sensor 104 eine Kamera in der Geräteumgebung 106 und einen Temperatursensor in dem Haushaltsküchengerät 102 auf. Die jeweils erfassten Sensorsignale werden vorzugsweise strukturiert, ggf. vorverarbeitet und dann in Form der Sensordaten (insbesondere gesammelt, jedoch in als getrennte Datenquellen) bereitgestellt. Die Kamera erfasst dabei Bilddaten des mindestens einen Haushaltsgerätes 102. Der Temperatursensor erfasst Temperatur(-zeitreihen)-daten zu dem mindestens einen Haushaltsgerät 102.

Der mindestens eine Sensor 104 kann allgemeiner einen optischen Sensor, insbesondere eine Kamera, und/oder einen Infrarotsensor und/oder einen Wärmebildsensor und/oder einen Temperatursensor und/oder ein Mikrofon und/oder einen Rauchsensor aufweisen. Die Sensordaten können also Bilddaten und/oder Videodaten und/oder Infrarot-Bilddaten und/oder Wärmebilddaten und/oder Temperaturdaten und/oder Audiodaten und/oder Rauchentwicklungsdaten aufweisen. Die Sensordaten können also vorzugsweise multimodal sein.

Ferner umfasst das System 100 mindestens eine Recheneinrichtung 108, auf der ein maschinelles Lernmodell 110 ausführbar ist, und die dazu ausgebildet ist, die bereitgestellten Sensordaten durch das maschinelle Lernmodell 110 zu verarbeiten. Das maschinelle Lernmodell 110 ist dazu trainiert, mindestens einen Hinweis auf die Brandgefahr oder den sich entwickelnden Brand in den Sensordaten zu erkennen. Auf Basis des mindestens einen Hinweises auf die Brandgefahr oder den sich entwickelnden Brand kann die Recheneinrichtung 108 mindestens eine Aktion 112 zumindest zur Verringerung der Brandgefahr oder des sich entwickelnden Brandes des Haushaltsküchengerätes 102 erzeugen.

Das maschinelle Lernmodell 110 kann trainiert werden, unter Verwendung eines vorbestimmten Grenzkriteriums, beispielsweise eines Temperaturschwellenwerts des Temperatursensors, den mindestens einen Hinweis auf die Brandgefahr oder den sich entwickelnden Brand in den Sensordaten zu erkennen.

Vorliegend ist die Recheneinrichtung 108 in einer Server- oder Cloudstruktur 114 ausgebildet und somit von dem Haushaltsküchengerät 102 beabstandet. In anderen Ausführungen kann die Recheneinrichtung 108 auch in dem Haushaltsküchengerät 102 umfasst sein. Das Haushaltsküchengerät 102 ist über eine Netzwerkverbindung, beispielsweise über WLAN, mit der Server- oder Cloudstruktur 114 verbunden. Die Sensoren 104 sind ebenfalls über die Netzwerkverbindung, beispielsweise über WLAN, mit der Server- oder Cloudstruktur 114 verbunden.

Das maschinelle Lernmodell 110 ist besonders bevorzugt, wie auch vorliegend gezeigt, dazu ausgebildet, den mindestens einen Hinweis in den insbesondere multimodalen Sensordaten auch unter Verwendung von Informationen über ein mit dem Haushaltsküchengerät 102 zubereitendes Gargut und/oder unter Verwendung von Informationen über ein Nutzerverhalten eines Nutzers des Haushaltsküchengerätes 102 und/oder unter Verwendung von Informationen über den Nutzer des Haushaltsküchengerätes 102 und/oder unter Verwendung von Informationen über ein Interaktionsverhalten eines Nutzers mit einer, insbesondere mobilen, Geräteapplikation 116, die auf einem mobilen Endgerät 118 des Nutzers ausführbar ist, zu erkennen. Das vorbestimmte Grenzkriterium kann dabei auch unter Verwendung von Informationen über ein mit dem Haushaltsküchengerät 102 zubereitendes Gargut und/oder unter Verwendung mindestens einer dieser Informationen anpassbar sein. Das mobile Endgerät 118 ist vorzugsweise über die Netzwerkverbindung, beispielsweise über WLAN, mit der Server- oder Cloudstruktur 114 verbunden.

Die mindestens eine Recheneinrichtung 108 ist dazu ausgebildet, die mindestens eine Aktion 112 mehrstufig zu erzeugen, um derart in mehreren Stufen die Verringerung der Brandgefahr oder des sich entwickelnden Brandes des Haushaltsküchengerätes 102 zu erwirken. Dabei kann in einer ersten Stufe durch die mindestens eine Aktion 112 ein akustisches und/oder visuelles und/oder haptisches Warnsignal erzeugt werden, um lediglich derart auf die Brandgefahr hinzuweisen. Ein solcher Hinweis kann beispielsweise auch auf dem mobilen Endgerät 118 des Nutzers ausgegeben werden. In einer weiteren Stufe kann die Recheneinrichtung 108 dazu ausgebildet sein, durch die mindestens eine Aktion 112 das Haushaltsküchengerät 102 abzuschalten oder zumindest in einen brandsicheren Betriebsmodus zu versetzen.

Für eine weitere Stufe kann das System 100 ferner einen Rauchabzug 120 aufweisen. Die Recheneinrichtung 108 kann dann dazu ausgebildet sein, durch die mindestens eine Aktion 112 den Rauchabzug 120 zu aktivieren.

Das System 100 weist ferner mindestens eine Löschmitteleinrichtung 122 zum Löschen eines Brandes des Küchengerätes 102 auf. Die Recheneinrichtung 108 ist in diesem Falle dazu ausgebildet, durch die mindestens eine Aktion 112 in einer weiteren Stufe die Löschmitteleinrichtung 122 zum Löschen des Brandes des Küchengerätes 102 zu aktivieren.

Um einen Nutzer zu schützen, kann es bevorzugt sein, wenn das System 100 auch über einen Kohlenstoffdioxid-Sensor 124 zum Messen einer Kohlenstoffdioxid-Konzentration in der Geräteumgebung 106 aufweist. Die Löschmitteleinrichtung 122 zum Löschen des Brandes des Küchengerätes 102 ist vorzugsweise zum Löschen mittels Kohlenstoffdioxid ausgebildet. Die Recheneinrichtung 108 ist dazu ausgebildet, die Löschmitteleinrichtung 122 in Abhängigkeit der gemessenen Kohlenstoffdioxid-Konzentration in der Geräteumgebung 106 zu regulieren, um eine Erstickungsgefahr für einen Nutzer, die durch das Löschen mit Kohlenstoffdioxid resultiert, zu verhindern.

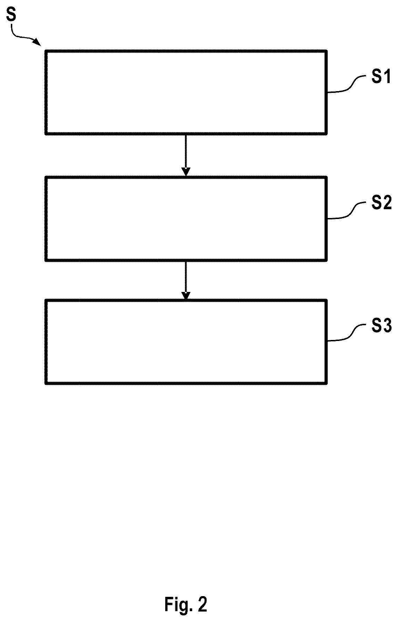

Figur 2 zeigt ein schematisches Flussdiagramm eines vorliegenden Verfahrens S zur Erkennung einer Brandgefahr oder eines sich entwickelnden Brandes eines Haushaltsküchengerätes 102.

In einem Schritt S1 umfasst das Verfahren S ein Erfassen von Sensordaten zu dem Haushaltsküchengerät 102 und/oder einer Geräteumgebung 106 durch mindestens einen Sensor 104.

In einem Schritt S2 umfasst das Verfahren S ein Verarbeiten der bereitgestellten Sensordaten durch mindestens ein maschinelles Lernmodell 110, das dazu trainiert ist, mindestens einen Hinweis auf die Brandgefahr oder den sich entwickelnden Brand in den Sensordaten zu erkennen.

In einem Schritt S3 umfasst das Verfahren S ein Erzeugen mindestens einer Aktion 112 zumindest zur Verringerung der Brandgefahr oder des sich entwickelnden Brandes des Haushaltsküchengerätes 102, wenn der mindestens eine Hinweis auf die Brandgefahr oder den sich entwickelnden Brand in den Sensordaten durch das maschinelle Lernmodell 110 erkannt wird.

### Bezugszeichenliste

- 100: System
- 102: Haushaltsküchengerät
- 104: Sensor
- 106: Geräteumgebung
- 108: Recheneinrichtung
- 110: maschinelles Lernmodell
- 112: Aktion
- 114: Server- oder Cloudstruktur
- 116: Geräteapplikation
- 118: mobiles Endgerät
- 120: Rauchabzug
- 122: Löschmitteleinrichtung
- 124: Kohlenstoffdioxid-Sensor

- S: Verfahren
- S1: Verfahrensschritt "Erfassen"
- S2: Verfahrensschritt "Verarbeiten"
- S3: Verfahrensschritt "Erzeugen"

## Patentansprüche

1. System (100) zur Erkennung einer Brandgefahr oder eines sich entwickelnden Brandes eines Haushaltsküchengerätes (102), das System (100) aufweisend, das Haushaltsküchengerät (102), mindestens einen Sensor (104) zum Erfassen von Sensordaten zu dem Haushaltsküchengerät (102) und/oder einer Geräteumgebung (106), und mindestens eine Recheneinrichtung (108), auf der ein maschinelles Lernmodell (110) ausführbar ist, und die dazu ausgebildet ist, die bereitgestellten Sensordaten durch das maschinelle Lernmodell (110), das dazu trainiert ist, mindestens einen Hinweis auf die Brandgefahr oder den sich entwickelnden Brand in den Sensordaten zu erkennen, zu verarbeiten, und auf Basis des mindestens einen Hinweises auf die Brandgefahr oder den sich entwickelnden Brand mindestens eine Aktion (112) zumindest zur Verringerung der Brandgefahr oder des sich entwickelnden Brandes des Haushaltsküchengerätes (102) zu erzeugen.

2. System nach Anspruch 1, wobei das maschinelle Lernmodell (110) dazu trainiert ist, unter Verwendung eines vorbestimmten Grenzkriteriums den mindestens einen Hinweis auf die Brandgefahr oder den sich entwickelnden Brand in den Sensordaten zu erkennen.

3. System nach Anspruch 1 oder 2, wobei der mindestens eine Sensor (104) einen optischen Sensor, insbesondere eine Kamera, und/oder einen Infrarotsensor und/oder einen Wärmebildsensor und/oder einen Temperatursensor und/oder ein Mikrofon und/oder einen Rauchsensor aufweist.

4. System nach einem der vorstehenden Ansprüche, wobei die Sensordaten Bilddaten und/oder Videodaten und/oder Infrarot-Bilddaten und/oder Wärmebilddaten und/oder Temperaturdaten und/oder Audiodaten und/oder Rauchentwicklungsdaten aufweisen.

5. System nach einem der vorstehenden Ansprüche, wobei das maschinelle Lernmodell (110) ferner dazu ausgebildet ist, den mindestens einen Hinweis in den Sensordaten auch unter Verwendung von Informationen über ein mit dem Haushaltsküchengerät (102) zubereitendes Gargut und/oder unter Verwendung von Informationen über ein Nutzerverhalten eines Nutzers des Haushaltsküchengerätes (102) und/oder unter Verwendung von Informationen über den Nutzer des Haushaltsküchengerätes (102) und/oder unter Verwendung von Informationen über ein Interaktionsverhalten eines Nutzers mit einer, insbesondere mobilen, Geräteapplikation (116) zu erkennen.

6. System nach Anspruch 2 und 5, wobei das vorbestimmte Grenzkriterium unter Verwendung von Informationen über ein mit dem Haushaltsküchengerät (102) zubereitendes Gargut und/oder unter Verwendung mindestens einer der Informationen anpassbar ist.

7. System nach einem der vorstehenden Ansprüche, wobei die mindestens eine Recheneinrichtung (108) dazu ausgebildet ist, die mindestens eine Aktion (112) mehrstufig zu erzeugen, um derart in mehreren Stufen die Verringerung der Brandgefahr oder des sich entwickelnden Brandes des Haushaltsküchengerätes (102) zu erwirken.

8. System nach einem der vorstehenden Ansprüche, wobei die Recheneinrichtung (108) dazu ausgebildet ist, durch die mindestens eine Aktion (112) ein akustisches und/oder visuelles und/oder haptisches Warnsignal auszugeben, um derart auf die Brandgefahr hinzuweisen.

9. System nach einem der vorstehenden Ansprüche, wobei die Recheneinrichtung (108) dazu ausgebildet ist, durch die mindestens eine Aktion (112) das Haushaltsküchengerät (102) abzuschalten oder zumindest in einen brandsicheren Betriebsmodus zu versetzen.

10. System nach einem der vorstehenden Ansprüche, wobei das System (100) ferner einen Rauchabzug (120) aufweist, und wobei die Recheneinrichtung (108) dazu ausgebildet ist, durch die mindestens eine Aktion (112) den Rauchabzug (120) zu aktivieren.

11. System nach einem der vorstehenden Ansprüche, wobei das System (100) mindestens eine Löschmitteleinrichtung (122) zum Löschen eines Brandes des Küchengerätes (102) aufweist, und wobei die Recheneinrichtung (108) dazu ausgebildet ist, durch die mindestens eine Aktion (112) die Löschmitteleinrichtung (122) zum Löschen des Brandes des Küchengerätes (102) zu aktivieren.

12. System nach Anspruch 11, wobei das System (100) einen Kohlenstoffdioxid-Sensor (124) zum Messen einer Kohlenstoffdioxid-Konzentration in der Geräteumgebung (106) aufweist, wobei die Löschmitteleinrichtung (122) zum Löschen des Brandes des Küchengerätes (102) mittels Kohlenstoffdioxid ausgebildet ist, und wobei die Recheneinrichtung (108) dazu ausgebildet ist, die Löschmitteleinrichtung (122) in Abhängigkeit der gemessenen Kohlenstoffdioxid-Konzentration in der Geräteumgebung (108) zu regulieren.

13. System nach einem der vorstehenden Ansprüche, wobei das Haushaltsküchengerät (102) den mindestens einen Sensor (104) umfasst und/oder wobei der mindestens eine Sensor (104) in der Geräteumgebung (106), insbesondere in einem intelligenten Lautsprecher und/oder in einem intelligenten Display und/oder in einem sonstigen intelligenten tragbaren Gerät (118), angeordnet ist.

14. System nach einem der vorstehenden Ansprüche, wobei das Haushaltsküchengerät (102) die Recheneinrichtung (108) aufweist, oder wobei die Recheneinrichtung (108) in einer Server- oder Cloudstruktur (114) ausgebildet ist.

15. Verfahren (S) zur Erkennung einer Brandgefahr oder eines sich entwickelnden Brandes eines Haushaltsküchengerätes (102), umfassend die Schritte:
- Erfassen (S1) von Sensordaten zu dem Haushaltsküchengerät (102) und/oder einer Geräteumgebung (106) durch mindestens einen Sensor (104);
- Verarbeiten (S2) der bereitgestellten Sensordaten durch mindestens ein maschinelles Lernmodell (110), das dazu trainiert ist, mindestens einen Hinweis auf die Brandgefahr oder den sich entwickelnden Brand in den Sensordaten zu erkennen; und
- wenn der mindestens eine Hinweis auf die Brandgefahr oder den sich entwickelnden Brand in den Sensordaten durch das maschinelle Lernmodell (110) erkannt wird, Erzeugen (S3) mindestens einer Aktion (112) zumindest zur Verringerung der Brandgefahr oder des sich entwickelnden Brandes des Haushaltsküchengerätes (102).
